# EUROPEAN PATENT SPECIFICATION

(11) **EP 3 725 458 B1**
(45) Date of publication and mention of the grant of the patent: **23.08.2023**
(21) Application number: 18888783.0
(22) Date of filing: 25.04.2018
(51) Int. Cl.: B23P 19/06, B60S 5/06, B60L 53/80, B60K 1/04, B25B 23/00, B25B 13/06, B25B 11/00, B60L 50/60

(54) **BOLT TIGHTENING MECHANISM AND BATTERY PACK MOUNTING BRACKET**
SCHRAUBENSPANNMECHANISMUS UND MONTAGEKLAMMER FÜR BATTERIEPACK
MÉCANISME DE SERRAGE DE BOULON ET SUPPORT DE MONTAGE DE BLOC-BATTERIE

(30) Priority: 15.12.2017 CN 201711351115
(43) Date of publication of application: 21.10.2020
(73) Proprietor: NIO (Anhui) Holding Co., Ltd, Hefei City, Anhui Province (CN)
(72) Inventor: TIAN, Xiaotao, Shanghai 201804 (CN); MA, Yongyue, Shanghai 201804 (CN); DING, Xikun, Shanghai 201804 (CN); LI, Nan, Shanghai 201804 (CN)
(74) Representative: v. Bezold & Partner Patentanwälte - PartG mbB
(86) International application number: PCT/CN2018/084436
(87) International publication number: WO 2019/114171

(56) References cited:
- WO-A1-2017/200631
- CN-A- 102 430 915
- CN-A- 106 515 681
- CN-A- 107 097 762
- CN-A- 107 097 762
- CN-U- 201 736 009
- CN-U- 201 736 009
- CN-U- 201 830 076
- CN-U- 204 954 320
- CN-U- 205 937 554
- CN-U- 206 561 381
- US-A1- 2009 115 156
- US-A1- 2012 228 245

## Description

### Technical Field

The invention relates to a bolt tightening mechanism and a battery pack mounting holder, and in particular to a battery pack mounting mechanism comprising a bolt tightening mechanism according to one of claims 1 to 4, capable of simultaneously operating a plurality of bolt tightening mechanisms.

### Background Art

At present, disassembly and assembly of a large-torque screw are usually carried out with hand-held servo electric tightening shafts. However, the existing hand-held servo electric tightening shafts are all imported, not only is the cost of a single piece high, but also the occupied space is too large, which is inconvenient to arrange. In an automated battery swap system for an electric vehicle, a plurality of large-torque screws need to be disassembled and assembled during battery swapping, if the existing hand-held servo electric tightening shafts are used, not only is the cost high, but also the plurality of tightening shafts cannot be operated at the same time, resulting in a long battery swapping time.

US2009/0115156 discloses a bolt tightening mechanism, comprising: a motor, a first socket, with one end being fitted with a second socket section, enabling the second socket section to drive the first socket to rotate, and the other end being used to be fitted with a bolt to be tightened.

US2009/0115156 relates to an axle module, which is obtained by coupling an axle member and a pair of leaf springs in the same vertical relationship as in the actual state of use. At such time, when the axle member is disposed on a work stand, pins passing through holes provided in the right and left leaf springs for mounting to a vehicle body are inserted prior to tightening U-bolts used to mount the leaf springs. In addition, by applying a small force, the axle member can be moved in-plane within a predetermined range relative to the leaf springs. Furthermore, the tightening of nuts is carried out by moving tightening tools disposed on a carriage to a position underneath the tips of the U-bolts subject to tightening and then raising and rotating sockets installed in the tightening tools.

### Summary of the Invention

An object of the invention is to provide a bolt tightening mechanism and a battery pack mounting mechanism to overcome the problems of the existing hand-held servo electric tightening shafts. The technical problem to be solved is to alleviate the problems that the existing tightening shafts are high in cost and occupy too much space so that a plurality of tightening shafts cannot be operated at the same time, thereby reducing the cost and the size, and allowing simultaneously disassembling and assembling bolts with a plurality of tightening shafts to reduce the battery swapping time.

The technical solutions according to claim 1 are used to achieve the object of the invention and address the technical problems to be solved.

Preferred embodiments are presented in the dependent claims.

The following technical measures may also be used to further achieve the object of the invention and solve the technical problem of the invention.

Preferably, the second socket is connected to the output shaft of the right-angle speed reducer via a key.

According to the invention, the first socket comprises a round socket section and a square socket section, the round socket section is used to be fitted with a bolt to be tightened, an end portion of one end, which is used to be fitted with the first socket, of the second socket is provided with a square hole, and one end, away from the round socket section, of the square socket section is arranged in the square hole for mutual fitting, leaving a gap between an outer wall of the square socket section and a wall of the square hole.

Preferably, an elastic component is further comprised, wherein one end, which is used to be fitted with the second socket, of the first socket is provided with a first stepped hole; one end, which is used to be fitted with the first socket, of the second socket is provided with a second stepped hole; the elastic component is arranged in the first stepped hole and the second stepped hole; and two ends of the elastic component are respectively fixed to the first socket and the second socket.

Preferably, an outer wall of the first socket is provided with a groove, the groove is annular and extends circumferentially along the first socket, and the groove is used to be retained on a main body frame for limiting the axial position of the first socket.

A preferred battery pack mounting holder comprises a bolt tightening mechanism as claimed in any one of claims 1 to 4, and a main body frame where a battery pack is placed, wherein the bolt tightening mechanism is connected to the main body frame, the first socket and the second socket are perpendicular to the plane where the main body frame is located, and the first socket extends from one side surface of the main body frame to the other side surface.

In the foregoing battery pack mounting holder, preferably an outer wall of the first socket is provided with a groove, the groove is annular and extends circumferentially along the first socket, the main body frame is provided with a mounting hole, a radially protruding limiting ring is provided on the main body frame at a position where the mounting hole is provided, and the groove is used to be retained on the limiting ring for limiting the axial position of the first socket.

In the foregoing battery pack mounting holder, preferably at least two battery pack positioning pins are provided on one side surface, where the battery pack is placed, of the main body frame, the battery pack positioning pins are higher than the first socket, and the battery pack positioning pins are used to be inserted into pin holes in the bottom of a vehicle body to align the first socket with a bolt to be tightened.

In the foregoing battery pack mounting holder, preferably at least two vehicle body pins are arranged on the main body frame, the top of the vehicle body pin can be extended or retracted, and the height of the vehicle body pin when extended, is consistent with that of the battery pack positioning pin, and when retracted, is lower than that of the side surface, where the battery pack is placed, of the main body frame.

In the foregoing battery pack mounting holder, preferably the main body frame is formed by square steel pipes welded to one another.

By virtue of the above technical solutions, the invention has at least the following advantages and beneficial effects:
(1) The bolt tightening mechanism of the invention comprises an electric motor, a right-angle speed reducer, and a first and a second socket, wherein the right-angle speed reducer drives the second socket to rotate, and the second socket drives the first socket to rotate. Due to the use of the electric motor and the right-angle speed reducer, the length of the bolt tightening mechanism of the invention is reduced, and multiple bolt tightening mechanisms can be accommodated and work simultaneously to improve the efficiency. When the bolt tightening mechanisms are used to disassemble and assemble a battery pack, the battery swapping time is shortened, and the mechanism can operate in a fully automated manner. The bolt tightening mechanism of the invention replaces the imported hand-held servo electric tightening shafts, so that the cost is greatly reduced.
(2) In the bolt tightening mechanism of the invention, the bottom of the square socket section of the first socket is arranged in the square hole of the second socket, leaving a gap between the outer wall of the square socket section and the square hole for solving the problem of positional deviation of the bolt and the first socket.
(3) In the bolt tightening mechanism of the invention, since the elastic component is arranged between the first socket and the second socket, the initial position of the first socket is automatically centered.
(3) In the bolt tightening mechanism of the invention, the outer wall of the first socket is provided with a groove for limiting the axial position of the first socket.
(4) In the battery pack mounting holder of the invention, the battery pack positioning pins are arranged on the main body frame. When the battery pack is being aligned, the battery pack positioning pins are respectively inserted into a pin hole, the first socket is then aligned with each bolt cap, and there is no need to carry out alignment one by one.

The aforementioned description is only an overview of the technical solutions of the invention. In order to clearly understand the technical means of the invention, the invention can be implemented according to the contents of the description; and in order to make the aforementioned and other objects, features and advantages of the invention more obvious and understandable, preferred embodiments are described in detail below with reference to the accompanying drawings.

### Brief Description of the Drawings

Fig. 1 is a schematic perspective structural diagram of a bolt tightening mechanism of the invention when first and second sockets are raised.
Fig. 2 is a schematic perspective structural diagram of the bolt tightening mechanism of the invention when the first and second sockets are lowered.
Fig. 3 is a partial sectional view of a battery pack mounting holder of the invention.
Fig. 4 is a perspective view of the battery pack mounting holder of the invention.

**[Description of Symbols]**

| | |
|---|---|
| 11: Electric motor | 21: First socket |
| 12: Right-angle speed reducer | 22: Second socket |
| 13: Speed reducer mounting frame | 14: Mounting hole |
| 23: Spring | 24: Round socket section |
| 25: Square socket section | 26: Groove |
| 27: First stepped hole | 28: Second stepped hole |
| 30: Main body frame | 31: Battery pack positioning pin |
| 32: Vehicle body pin | 33: Vehicle body pin holder |

### Detailed Description of Embodiments

In order to further illustrate the technical means used to achieve the intended purpose of the invention and the technical effects of the invention, the implementation of a bolt tightening mechanism proposed in the invention and the features and effects thereof are described in detail hereinafter in conjunction with the accompanying drawings and the preferred embodiments.

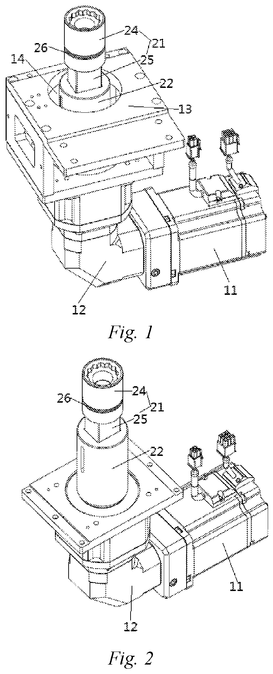

Referring to Figs. 1, 2 and 3, a bolt tightening mechanism of the invention comprises an electric motor 11, a right-angle speed reducer 12, a first socket 21, and a second socket 22. An output shaft of the electric motor 11 is connected to an input shaft of the right-angle speed reducer 12. One end of the first socket 21 is fitted with and the second socket 22, and the other end of the first socket 21 is provided with an internal thread to be fitted with a bolt to be tightened. The other end of the second socket 22 is fixed on an output shaft of the right-angle speed reducer 12, and the second socket 22 can drive the first socket 21 to rotate. When the electric motor 11 is turned on, the electric motor 11 drives the second socket 22 to rotate via the right-angle speed reducer 12, and the second socket 22 drives the first socket 21 to rotate, so as to detach or install the bolt. Due to the use of the right-angle speed reducer, the length of the bolt tightening mechanism of the invention is reduced, and multiple bolt tightening mechanisms can be simultaneously operated to increase the efficiency.

In a preferred embodiment, the electric motor 11 takes the form of a servo motor and the second socket 22 is connected to the output shaft of the right-angle speed reducer 12 via a key. Alternatively, the electric motor 11 may take the form of other common electric motors, and the second socket 22 and the output shaft of the right-angle speed reducer 12 are welded to each other or fixed in other manners. According to the invention, the first socket 21 comprises a round socket section 24 and a square socket section 25. The round socket section 24 and the square socket section 25 are integrally formed. The top of the round socket section 24 is used to be fitted with the bolt to be tightened. The top of the second socket 22 is provided with a square hole. The bottom of the square socket section 25 is provided in the square hole, leaving a gap between the outer wall of the square socket section 25 and the square hole. When the unilateral gap is 1 mm, and when the bolt to be tightened is positionally deviated from the first socket 21, the first socket 21 can be unilaterally offset by 2 mm, to solve the problem of positional deviation of the bolt.

In an embodiment, an elastic component is arranged between the first socket 21 and the second socket 22 to adjust the axial position between the first socket and the second socket. Specifically, one end, which is fitted with the second socket 22, of the first socket 21 is provided with a first stepped hole 27; one end, which is fitted with the first socket 21, of the second socket 22 is provided with a second stepped hole 28; the elastic component is arranged in the first stepped hole 27 and the second stepped hole 28; and two ends of the elastic component are respectively fixed to bottom parts of the first stepped hole 27 and the second stepped hole 28 by means of welding. Specifically, the elastic component takes the form of a spring 23. The initial position of the first socket 21 will be automatically centered under the action of the elastic component.

In a preferred embodiment, the outer wall of the first socket 21 is provided with a groove 26, the groove 26 is annular and extends circumferentially along the first socket 21, and the groove 26 can be retained on a main body frame 30 for limiting the axial position of the first socket 21.

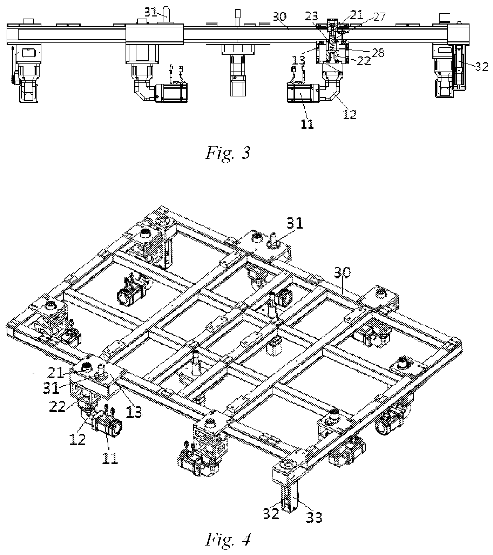

Referring to Figs. 3 and 4, a preferred battery pack mounting holder comprises a main body frame 30 and a plurality of bolt tightening mechanisms as mentioned above. The number of the bolt tightening mechanisms is the same as that of the bolts. An upper surface of the main body frame 30 is used to place a battery pack.

The bolt tightening mechanism mentioned above is connected to the main body frame 30. The first socket 21 and the second socket 22 are perpendicular to the plane where the main body frame 30 is located. Specifically, a speed reducer mounting frame 13 is connected to the main body frame 30 via bolts. A housing of the right-angle speed reducer 12 of the bolt tightening mechanism is mounted on the speed reducer mounting frame 13 via bolts. The speed reducer mounting frame 13 is provided with a mounting hole 14. The first socket 21 and the second socket 22 pass through the mounting hole 14. The first socket 21 extends out of the main body frame 30. Alternatively, the housing of the right-angle speed reducer 12 may be connected to the speed reducer mounting frame 13 by means of welding or other methods. The main body frame 30 and the speed reducer mounting frame 13 may also be connected to each other by means of welding or other methods, or are directly integrated together. The electric motor 11 is turned on, the electric motor 11 drives the second socket 22 to rotate via the right-angle speed reducer 12, and the second socket 22 drives the first socket 21 to rotate to detach or install the bolt. Due to the use of the right-angle speed reducer, the length of the bolt tightening mechanism of the invention is reduced, and multiple bolt tightening mechanisms can be arranged on the main body frame 30 to simultaneously operate to increase the efficiency and reduce the battery swapping time.

Preferably, the outer wall of the first socket 21 is provided with a groove 26, the groove 26 is annular and extends circumferentially along the first socket 21, and a radially protruding limiting ring is provided on the speed reducer mounting frame 13 at a position where the mounting hole 14 is provided. The first socket 21 is compressed and lowered by the battery pack. When the groove 26 reaches the position of the limiting ring, the groove 26 is retained on the limiting ring for limiting the axial position of the first socket 21.

Preferably, a plurality of battery pack positioning pins 31 are provided on one side surface, where the battery pack is placed, of the main body frame 30, and the battery pack positioning pins 31 are higher than the first socket 21. In this embodiment, there are two battery pack positioning pins 31, when the battery pack is being aligned, the battery pack positioning pins 31 are respectively inserted into pin holes in the bottom of a vehicle body, and the first socket 21 is then aligned with each bolt cap. The electric motor 11 is turned on, the bolt tightening mechanism is raised, the first socket 21 is compressed to come into contact with the bottom of the battery pack, and the electric motor 11 rotates to detach or install the bolt.

Preferably, a plurality of vehicle body pins 32 are further arranged on the main body frame 30. In this embodiment, two vehicle body pins 32 are provided, and a vehicle body pin holder 33 is fixedly welded on the main body frame 30. The vehicle body pins 32 are mounted on the vehicle body pin holder 33. A vehicle body pin hole is formed on the main body frame 30 at a position corresponding to each vehicle body pin 32. The vehicle body pin 32 is an electric retractable pin, the top of which can be extended out of or retracted into the vehicle body pin hole. The height of the vehicle body pin, when extended, is consistent with that of the battery pack positioning pin 31, and when retracted, is lower than that of a support face of the main body frame 30, without affecting the positioning of the battery pack pin. The vehicle body pin holder 33 may also be fixed on the main body frame 30 by means of other methods. When the battery pack is being mounted, the vehicle body pins 32 respectively extend into the pin holes in the bottom of the vehicle body. The entire alignment method does not involve visual positioning, which can be completed only by means of the alignment of the vehicle body pins 32 and the alignment of the battery pack positioning pins 31, so that the structure is simple, the cycle time is less, and the reliability is high.

Preferably, the main body frame 30 is formed by square steel pipes welded to one another, which is lightweight and of high stiffness and strength.

The foregoing descriptions are merely preferred embodiments of the invention, and are not intended to limit the invention in any form. Although the invention has been disclosed as above by means of the preferred embodiments, these embodiments are not for the purpose of limiting the invention. Those skilled in the art can make alterations or modifications to the technical contents disclosed above without departing from the technical solutions of the invention as defined in the appended claims. However, any simple amendments, and modifications may be made to the above embodiments within the scope of the technical solutions of the invention as defined in the appended claims.

## Claims

1. A bolt tightening mechanism, comprises:
an electric motor (11), the electric motor (11) being connected to a right-angle speed reducer (12);
a first socket (21), with one end being fitted with a second socket (22), enabling the second socket (22) to drive the first socket (21) to rotate, and the other end being used to be fitted with a bolt to be tightened; and
the second socket (22), with the other end being fixed on an output shaft of the right-angle speed reducer (12),
wherein the first socket (21) comprises a round socket section (24) and a square socket section (25), the round socket section (24) is used to be fitted with the
bolt to be tightened, an end portion of one end, which is used to be fitted with the first socket (21), of the second socket (22) is provided with a square hole, and one end, away from the round socket section (24), of the square socket section (25) is arranged in the square hole for mutual fitting, leaving a gap between an outer wall of the square socket section (25) and a wall of the square hole.

2. The bolt tightening mechanism according to claim 1, **characterized in that** the second socket (22) is connected to the output shaft of the right-angle speed reducer (12) via a key.

3. The bolt tightening mechanism according to claim 1, **characterized by** further comprising an elastic component, wherein one end, which is used to be fitted with the second socket (22), of the first socket (21) is provided with a first stepped hole (27); one end, which is used to be fitted with the first socket (21), of the second socket (22) is provided with a second stepped hole (28); the elastic component is arranged in the first stepped hole (27) and the second stepped hole (28); and two ends of the elastic component are respectively fixed to the first socket (21) and the second socket (22).

4. The bolt tightening mechanism according to claim 1, **characterized in that** an outer wall of the first socket (21) is provided with a groove (26), the groove (26) is annular and extends circumferentially along the first socket (21), and the groove (26) is used to be retained on a main body frame (30) for limiting the axial position of the first socket (21).

5. A battery pack mounting holder, **characterized by** comprising
a bolt tightening mechanism as claimed in any one of claims 1-4, and
a main body frame (30) where a battery pack is placed, wherein
the bolt tightening mechanism is connected to the main body frame (30), the first socket (21) and the second socket (22) are perpendicular to the plane where the main body frame (30) is located, and the first socket (21) extends from one side surface of the main body frame (30) to the other side surface.

6. The battery pack mounting holder according to claim 5, **characterized in that** an outer wall of the first socket (21) is provided with a groove (26), the groove (26) is annular and extends circumferentially along the first socket (21), the main body frame (30) is provided with a mounting hole, a radially protruding limiting ring is provided on the main body frame (30) at a position where the mounting hole (14) is provided, and the groove (26) is used to be retained on the limiting ring for limiting the axial position of the first socket (21).

7. The battery pack mounting holder according to claim 5, **characterized in that** at least two battery pack positioning pins (31) are provided on one side surface, where the battery pack is placed, of the main body frame (30), the battery pack positioning pins (31) are higher than the first socket (21), and the battery pack positioning pins (31) are used to be inserted into pin holes in the bottom of a vehicle body to align the first socket (21) with a bolt to be tightened.

8. The battery pack mounting holder according to claim 7, **characterized in that** at least two vehicle body pins (32) are arranged on the main body frame (30), the top of the vehicle body pin (32) can be extended or retracted, and the height of the vehicle body pin (32) when extended, is consistent with that of the battery pack positioning pin (31), and when retracted, is lower than that of the side surface, where the battery pack is placed, of the main body frame (30).

9. The battery pack mounting holder according to claim 5, **characterized in that** the main body frame (30) is formed by square steel pipes welded to one another.

## Patentansprüche

1. Schraubenanzugsmechanismus, der umfasst:
einen Elektromotor (11), wobei der Elektromotor (11) mit einem Winkeluntersetzungsgetriebe (12) verbunden ist;
eine erste Aufnahme (21), wobei ein Ende mit einer zweiten Aufnahme (22) zusammengefügt ist, was der zweiten Aufnahme (22) ermöglicht, die erste Aufnahme (21) drehend anzutreiben, und das andere Ende verwendet wird, um mit einer anzuziehenden Schraube zusammengefügt zu werden; und
wobei die zweite Aufnahme (22) mit dem anderen Ende an einer Ausgangswelle des Winkeluntersetzungsgetriebes (12) befestigt ist,
wobei die erste Aufnahme (21) einen runden Aufnahmenabschnitt (24) und einen quadratischen Aufnahmenabschnitt (25) umfasst, wobei der runde Aufnahmenabschnitt (24) verwendet wird, um mit der anzuziehenden Schraube zusammengefügt zu werden, wobei ein Endteil eines Endes der zweiten Aufnahme (22), das verwendet wird, um mit der ersten Aufnahme (21) zusammengefügt zu werden, mit einer quadratischen Öffnung versehen ist, und ein von dem runden Aufnahmenabschnitt (24) entferntes Ende des quadratischen Aufnahmenabschnitts (25) in der quadratischen Öffnung zum gegenseitigen Zusammenfügen angeordnet ist, wobei ein Spalt zwischen einer Außenwand des quadratischen Aufnahmenabschnitts (25) und einer Wand der quadratischen Öffnung belassen ist.

2. Schraubenanzugsmechanismus nach Anspruch 1, **dadurch gekennzeichnet, dass** die zweite Aufnahme (22) mit der Ausgangswelle des Winkeluntersetzungsgetriebes (12) über eine Passfeder verbunden ist.

3. Schraubenanzugsmechanismus nach Anspruch 1, **dadurch gekennzeichnet, dass** er ferner eine elastische Komponente umfasst, wobei ein Ende der ersten Aufnahme (21), das verwendet wird, um mit der zweiten Aufnahme (22) zusammengefügt zu werden, mit einer ersten gestuften Öffnung (27) versehen ist; ein Ende der zweiten Aufnahme (22), das verwendet wird, um mit der ersten Aufnahme (21) zusammengefügt zu werden, mit einer zweiten gestuften Öffnung (28) versehen ist; die elastische Komponente in der ersten gestuften Öffnung (27) und der zweiten gestuften Öffnung (28) angeordnet ist; und zwei Enden der elastischen Komponente an der ersten Aufnahme (21) bzw. der zweiten Aufnahme (22) befestigt sind.

4. Schraubenanzugsmechanismus nach Anspruch 1, **dadurch gekennzeichnet, dass** eine Außenwand der ersten Aufnahme (21) mit einer Nut (26) versehen ist, wobei die Nut (26) ringförmig ist und sich umlaufend entlang der ersten Aufnahme (21) erstreckt, und die Nut (26) verwendet wird, um an einem Hauptkörperrahmen (30) zum Begrenzen der axialen Position der ersten Aufnahme (21) gehalten zu sein.

5. Batteriepackungsmontagehalter, **dadurch gekennzeichnet, dass** er umfasst
einen Schraubenanzugsmechanismus nach einem der Ansprüche 1-4, und
einen Hauptkörperrahmen (30), an dem eine Batteriepackung platziert ist, wobei
der Schraubenanzugsmechanismus mit dem Hauptkörperrahmen (30) verbunden ist, wobei die erste Aufnahme (21) und die zweite Aufnahme (22) senkrecht zu der Ebene sind, in der sich der Hauptkörperrahmen (30) befindet, und sich die erste Aufnahme (21) von einer Seitenfläche des Hauptkörperrahmens (30) zu der anderen Seitenfläche erstreckt.

6. Batteriepackungsmontagehalter nach Anspruch 5, **dadurch gekennzeichnet, dass** eine Außenwand der ersten Aufnahme (21) mit einer Nut (26) versehen ist, wobei die Nut (26) ringförmig ist und sich umlaufend entlang der ersten Aufnahme (21) erstreckt, wobei der Hauptkörperrahmen (30) mit einer Montageöffnung versehen ist, wobei ein radial hervorstehender Begrenzungsring an dem Hauptkörperrahmen (30) an einer Position bereitgestellt ist, an der die Montageöffnung (14) bereitgestellt ist, und die Nut (26) verwendet wird, um an dem Begrenzungsring zum Begrenzen der axialen Position der ersten Aufnahme (21) gehalten zu sein.

7. Batteriepackungsmontagehalter nach Anspruch 5, **dadurch gekennzeichnet, dass** mindestens zwei Batteriepackungspositionierungsstifte (31) an einer Seitenfläche des Hauptkörperrahmens (30), an der die Batteriepackung platziert ist, bereitgestellt sind, wobei die Batteriepackungspositionierungsstifte (31) höher als die erste Aufnahme (21) sind, und die Batteriepackungspositionierungsstifte (31) verwendet werden, um in Stiftöffnungen in der Unterseite einer Fahrzeugkarosserie eingesetzt zu werden, um die erste Aufnahme (21) mit einer anzuziehenden Schraube auszurichten.

8. Batteriepackungsmontagehalter nach Anspruch 7, **dadurch gekennzeichnet, dass** mindestens zwei Fahrzeugkarosseriestifte (32) an dem Hauptkörperrahmen (30) angeordnet sind, wobei die Oberseite des Fahrzeugkarosseriestifts (32) ausgezogen oder eingezogen werden kann, und die Höhe des Fahrzeugkarosseriestifts (32), wenn er ausgezogen ist, mit der des Batteriepackungspositionierungsstifts (31) übereinstimmt, und wenn er eingezogen ist, niedriger ist als die der Seitenfläche des Hauptkörperrahmens (30), an der die Batteriepackung platziert ist.

9. Batteriepackungsmontagehalter nach Anspruch 5, **dadurch gekennzeichnet, dass** der Hauptkörperrahmen (30) durch aneinander geschweißte quadratische Stahlrohre gebildet ist.

## Revendications

1. Mécanisme de serrage de boulon, comprenant :
un moteur électrique (11), le moteur électrique (11) étant relié à un réducteur de vitesse à angle droit (12) ;
une première douille (21), avec une extrémité équipée d'une seconde douille (22), permettant à la seconde douille (22) d'entraîner la rotation de la première douille (21), et l'autre extrémité utilisée pour être équipée d'un boulon destiné à être serré ; et
la seconde douille (22), avec l'autre extrémité fixée sur un arbre de sortie du réducteur de vitesse à angle droit (12),
dans lequel la première douille (21) comprend une section de douille ronde (24) et une section de douille carrée (25), la section de douille ronde (24) est utilisée pour être équipée du boulon destiné à être serré, une partie d'extrémité d'une extrémité, qui est utilisée pour être équipée de la première douille (21), de la seconde douille (22) est pourvue d'un trou carré, et une extrémité, éloignée de la section de douille ronde (24), de la section de douille carrée (25) est agencée dans le trou carré pour ajustement mutuel, laissant un espace entre une paroi extérieure de la section de douille carrée (25) et une paroi du trou carré.

2. Mécanisme de serrage de boulon selon la revendication 1, **caractérisé en ce que** la seconde douille (22) est reliée à l'arbre de sortie du réducteur de vitesse à angle droit (12) par l'intermédiaire d'une clavette.

3. Mécanisme de serrage de boulon selon la revendication 1, **caractérisé en ce qu'**il comprend en outre un composant élastique, dans lequel une extrémité, qui est utilisée pour être équipée de la seconde douille (22), de la première douille (21) est pourvue d'un premier trou épaulé (27) ; une extrémité, qui est utilisée pour être équipée de la première douille (21), de la seconde douille (22) est pourvue d'un second trou épaulé (28) ; le composant élastique est agencé dans le premier trou épaulé (27) et le second trou épaulé (28) ; et deux extrémités du composant élastique sont respectivement fixées à la première douille (21) et la seconde douille (22).

4. Mécanisme de serrage de boulon selon la revendication 1, **caractérisé en ce qu'**une paroi extérieure de la première douille (21) est pourvue d'une rainure (26), la rainure (26) est annulaire et s'étend circonférentiellement le long de la première douille (21), et la rainure (26) est utilisée pour être retenue sur un cadre de corps principal (30) pour limiter la position axiale de la première douille (21).

5. Support de montage de bloc batterie, **caractérisé en ce qu'**il comprend
un mécanisme de serrage de boulon selon l'une quelconque des revendications 1 à 4, et
un cadre de corps principal (30) où un bloc batterie est placé, dans lequel
le mécanisme de serrage de boulon est relié au cadre de corps principal (30), la première douille (21) et la seconde douille (22) sont perpendiculaires au plan où le cadre de corps principal (30) est situé, et la première douille (21) s'étend depuis une surface latérale du cadre de corps principal (30) jusqu'à l'autre surface latérale.

6. Support de montage de bloc batterie selon la revendication 5, **caractérisé en ce qu'**une paroi extérieure de la première douille (21) est pourvue d'une rainure (26), la rainure (26) est annulaire et s'étend circonférentiellement le long de la première douille (21), le cadre de corps principal (30) est pourvu d'un trou de montage, une bague limitatrice faisant saillie radialement est prévue sur le cadre de corps principal (30) à une position où le trou de montage (14) est prévu, et la rainure (26) est utilisée pour être retenue sur la bague limitatrice pour limiter la position axiale de la première douille (21).

7. Support de montage de bloc batterie selon la revendication 5, **caractérisé en ce qu'**au moins deux goupilles de positionnement de bloc batterie (31) sont prévues sur une surface latérale, où le bloc batterie est placé, du cadre de corps principal (30), les goupilles de positionnement de bloc batterie (31) sont plus hautes que la première douille (21), et les goupilles de positionnement de bloc batterie (31) sont utilisées pour être insérées dans des trous de goupille dans le bas d'une carrosserie de véhicule pour aligner la première douille (21) avec un boulon destiné à être serré.

8. Support de montage de bloc batterie selon la revendication 7, **caractérisé en ce qu'**au moins deux goupilles de carrosserie de véhicule (32) sont agencées sur le cadre de corps principal (30), le haut de la goupilles de carrosserie de véhicule (32) peut être étendu ou rétracté, et la hauteur de la goupille de carrosserie de véhicule (32) lorsqu'elle est étendue, correspond à celle de la goupille de positionnement de bloc batterie (31), et, lorsqu'elle est rétractée, est plus basse que celle de la surface latérale, où le bloc batterie est placé, du cadre de corps principal (30).

9. Support de montage de bloc batterie selon la revendication 5, **caractérisé en ce que** le cadre de corps principal (30) est formé par des tubes d'acier carrés soudés les uns aux autres.
